# EUROPÄISCHE PATENTSCHRIFT

(11) **EP 1 634 937 B1**
(45) Veröffentlichungstag und Bekanntmachung des Hinweises auf die Patenterteilung: **23.04.2008**
(21) Anmeldenummer: 05016521.6
(22) Anmeldetag: 29.07.2005
(51) Int. Cl.: C09K 5/10, C09K 5/20, C23F 11/10

(54) **Silikatfreie Kühlflüssigkeiten auf Basis organischer Säuren und Carbamaten mit verbesserten Korrosionseigenschaften**
Silicate-Free, organic acids and carbamate based cooling liquids with improved corrosion properties
Fluides de refroidissement sans silicate, à base d'acides organiques et de carbamate, présentant des propriétés anticorrosives meilleures

(30) Priorität: 12.08.2004 DE 102004039149
(43) Veröffentlichungstag der Anmeldung: 15.03.2006
(73) Patentinhaber: Clariant Produkte (Deutschland) GmbH, 65929 Frankfurt am Main (DE)
(72) Erfinder: Hafner, Markus, Dr., 64556 Kastl (DE); Stankowiak, Achim, Dr., 84503 Altötting (DE)

(56) Entgegenhaltungen:
- DE-A1- 10 235 390
- DE-A1- 19 930 682
- US-A- 5 407 597

## Beschreibung

Die vorliegende Erfindung betrifft neuartige Kühlflüssigkeiten auf Basis von Glykolen, Polyglykolen oder Glycerin, die frei von Silikaten sind. Sie enthalten neben anderen Zusätzen hauptsächlich organische Säuren und einen neuartigen, aktiven Inhibitor zum Schutz von Eisen- und Leichtmetallen bzw. Leichtmetall-Legierungen.

Der Einsatz von Kühlflüssigkeiten ist zum Beispiel in technischen Anlagen zum Kälte- und Wärmetransport oder in modernen Kraftfahrzeugmotoren recht problematisch. Aufgrund der dort vorherrschenden hohen Heizflächenbelastungen und den hohen Fließgeschwindigkeiten beim Kühlmedium werden an die Kühlflüssigkeit höchste Ansprüche zum Schutz vor allen denkbaren Korrosionsarten gestellt. Ebenso muss bei der Entwicklung der Kühlflüssigkeiten die heute übliche Mischbauweise berücksichtigt werden, da Metalle wie Aluminium, Eisen bzw. Stahl, Gusseisen (Grauguss), Kupfer, Messing, Blei, Zinn, Zink und deren Legierungen (z.B. Weichlot) eingesetzt werden.

Aufgrund ihres schlechten Korrosionsverhaltens gegenüber Aluminium und seinen Legierungen wird immer mehr auf borathaltige Wärmeträgerflüssigkeiten verzichtet. Zur Erreichung der notwendigen Reservealkalität der Kühlflüssigkeiten wurde auf die Technologie der organischen Säuren (so genannte OAT-Flüssigkeiten, Organic Acid Technology) zurückgegriffen. OAT-Flüssigkeiten sind in aller Regel auch frei von Silikaten. Eine Ausnahme sind die "Hybrid-OAT's", die etwas Silikat enthalten. OAT-Flüssigkeiten ermöglichen im Automobilbereich ein verlängertes Wechselintervall bzw. eine so genannte Lebensdauerbefüllung. Mit dem Fehlen von Silikaten ist jedoch der verbleibende Leichtmetallschutz allzu oft unzureichend oder im Extremfall gar nicht vorhanden.

Silikatfreie Kühlmittelformulierungen werden unter anderem in EP-A-0 816 467 und DE 199 30 682 A1 beschrieben. Letzteres offenbart eine Verbesserung der antikorrosiven Eigenschaften der beschriebenen Kühlmittel unter Verwendung einer Triazintriiminocarbonsäure und anderen Zusätzen.

DE 102 35 390 A1 beschreibt ein Gefrierschutzmittelkonzentrat zum Schutz von Leichtmetall-Kühlkreisläufen, insbesondere von Magnesium- und Aluminiumenthaltenden Kreisläufen. Der Korrosionsschutz wird hier durch eine geeignete Kombination von sulfonierten bzw. sulfatierten Polyglykolen und/oder entsprechenden Carbamaten sowie anderen Zusätzen erreicht.

Aufgabe der vorliegenden Erfindung war es, den Leichtmetall-Korrosionsschutz von bestehenden, silikatfreien Wärmeträgerflüssigkeiten zu verbessern.

Überraschend wurde nun gefunden, dass gerade die Kombination von Carbamaten mit Mono-, Di- und Tricarbonsäuren sowie auch Triazintriiminocarbonsäuren, einen hervorragenden Korrosionsschutz für Leicht- und Eisenmetalle liefert. Insbesondere gilt dies bei hoher Temperaturbelastung auf diese Metalle, wie es beispielsweise in Automobilmotoren der Fall ist.

Gegenstand der Erfindung sind somit Kühlmittel bzw. Gefrierschutzmittelkonzentrate, enthaltend:
a) 0,05 bis 5 Gew.-% eines oder mehrerer Carbamate der Formel 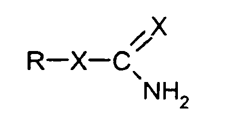 worin
   - X: O oder S,
   - R: C₁- bis C₈-Alkyl oder C₆- bis C₁₈-Aryl bedeuten,
   oder deren Ammoniumsalze,
b) 0,05 bis 4 Gew.-% einer Tricarbonsäure und/oder einer Triazintriiminocarbonsäure,
c) 0,05 bis 8 Gew.-% einer Mono- und/oder Dicarbonsäure mit 4 bis 16 C-Atomen, in Form ihrer Alkalimetall- oder Ammoniumsalze,
d) 0,01 bis 2 Gew.-% eines Kohlenwasserstofftriazols oder Kohlenwasserstoffthiazols,
e) 0,01 bis 2 Gew.-% eines wasserlöslichen Alkali- und/oder Erdalkalimetallsalzes
f) 80 bis 99 Gew.-% Alkylenglykole, Polyglykole oder Glycerin.

Ein weiterer Gegenstand der Erfindung sind wässrige Kühlmittelzusammensetzungen, die neben 5 bis 90, vorzugsweise 5 bis 80 Gew.-% der erfindungsgemäßen oben angegebenen Zusammensetzung zwischen 10 bis 95, vorzugsweise 20 bis 95 Gew.-%, Wasser enthalten.

Ein weiterer Gegenstand der Erfindung ist die Verwendung der oben angegebenen erfindungsgemäßen Zusammensetzung als Kühlmittel.

Bestandteil a) ist vorzugsweise in Mengen von 0,08 bis 2 Gew.-% vorhanden. Beispiele für geeignete Carbamate sind Methylcarbamat, Benzylcarbamat, Ammoniumcarbamat, Dimethylammoniumdimethylcarbamat. In einer besonders bevorzugten Ausführung der Erfindung findet Methylcarbamat seinen Einsatz.

Bestandteil b) umfasst Tricarbonsäuren und Triazintriiminocarbonsäuren aliphatischer oder aromatischer Struktur in einer Konzentration von vorzugsweise 0,1 bis 2 Gew.-%. Besonders bevorzugte Verbindungen dieser Gruppe sind 6,6',6"-(1,3,5-Triazin-2,4,6-triyltriimino)trihexansäure, 2-Hydroxy-1,2,3-propantricarbonsäure (Zitronensäure) und Benzol-1,3,5-tricarbonsäure. Die Säuren des Bestandteils b) können als Alkalimetall- oder Ammoniumsalze vorliegen. Die Tricarbonsäuren können auch in Mischungen mit beliebigen Anteilsverhältnissen im Gefrierschutzmittel enthalten sein. Die erfindungsgemäße Zusammensetzung enthält vorzugsweise 0,1 bis 4,5, insbesondere 0,5 bis 4 Gew.-% des Bestandteils b).

Als Bestandteil c) kommen verzweigte und/oder unverzweigte, aliphatische und/oder aromatische Mono- und Dicarbonsäuren in Frage. Beispiele für derartige Monocarbonsäuren sind Pentansäure, Hexansäure, Heptansäure, 2-Ethylhexansäure, Nonansäure, Isononansäure, Decansäure, Undecansäure und Dodecansäure. Als aromatische Monocarbonsäuren sind vorzugsweise Benzoesäure, 4-tert.-Butylbenzoesäure oder 4-Methoxybutylbenzoesäure geeignet. Beispiele für Dicarbonsäuren sind insbesondere solche mit 4 bis 12 C-Atomen, wie beispielsweise Korksäure, Azelainsäure, Sebazinsäure, Undecansäure und Dodecansäure, aber auch Phthalsäure, Isophthalsäure oder Terephthalsäure. Weiter können die beschriebenen Carbonsäuren auch andere funktionelle Gruppen enthalten. Hierzu gehören unter anderem Ether-, Hydroxyl- und Carboxylgruppen. Die Carbonsäuren liegen im erfindungsgemäßen Kühlmittel jeweils in Form ihres Alkalimetallsalzes oder auch als korrespondierendes Ammoniumsalz vor. Die Mono- und Dicarbonsäuren können auch in Mischungen mit beliebigen Anteilsverhältnissen im Gefrierschutzmittel enthalten sein. Die erfindungsgemäße Zusammensetzung enthält vorzugsweise 0,1 bis 4,5, insbesondere 0,5 bis 4 Gew.-% des Bestandteils c).

Als Bestandteil d) kommt vorzugsweise ein Kohlenwasserstofftriazol, wie Tolyltriazol, Benzotriazol, aber auch geeignete Imidazole, Thiazole oder Pyrimidine in Frage. Vorzugsweise enthält die erfindungsgemäße Zusammensetzung 0,05 bis 1 Gew.-% Kohlenwasserstofftriazole oder Kohlenwasserstoffthiazole.

Bestandteil e) dient als Co-Inhibitor und umfasst bevorzugt wasserlösliche Magnesium- oder Kaliumsalze, die zum Beispiel als Nitrate zum Einsatz kommen. Üblicherweise wird Bestandteil e) in Konzentrationen von 0,05 bis 1 Gew.-%, besonders bevorzugt von 0,1 bis 0,5 Gew.-% verwendet.

Als Bestandteil f) kommen neben Monoethylenglykol und 1,2-Propylenglykol auch geeignete Polyglykole oder Glycerin oder auch Mischungen hiervon in Frage. Bevorzugt sind Monoethylenglykol und 1,2-Propylenglykol.

In einer weiteren bevorzugten Ausführungsform addieren sich die Bestandteile a) bis f) zu 100 Gew.-%.

Wasser (Bestandteil g)) dient im Einzelfall als Lösungsvermittler für spezifische Additive, und die erfindungsgemäßen Zusammensetzungen können gegebenenfalls bis zu 6 Gew.-% Wasser enthalten.

Die erfindungsgemäße Kühlflüssigkeit kann gegebenenfalls auch bis zu 4 Gew.-% Verbindungen ausgewählt aus Alkalimetallnitriten, Aminen, Alkalimetallphosphaten, Alkalimetallphosphonaten, Alkalimetallboraten und Alkalimetallmolybdaten als Bestandteil h) enthalten.

Die erfindungsgemäße Kühlflüssigkeit kann gegebenenfalls auch bis zu 1 Gew.-% an geeigneten Hartwasserstabilisatoren und/oder anderen geeigneten Additiven enthalten.

Besonders bevorzugt ist die Verwendung der oben genannten Zusammensetzung in Automobil-Kühlkreisläufen oder als korrosionsinhibierndes Gefrierschutzmittel in industriellen Heiz- und Kühlkreisläufen, insbesondere in solchen, die Leichtmetalle bzw. deren Legierungen enthalten.

Der pH-Wert der Gefrierschutzmittelkonzentrate liegt in wässriger Verdünnung (1:2) vorzugsweise zwischen 5 und 12, insbesondere zwischen 7,5 bis 9,5.

Die erfindungsgemäßen Kühlflüssigkeiten enthalten als Konzentrat zum überwiegenden Teil Alkylenglykole, aber auch geeignete Polyglykole oder Glycerin. Zur Anwendung im Kühlkreislauf werden die entsprechenden Kühlmittel in der Regel mit Wasser verdünnt. Die Verdünnung mit Wasser soll hierbei für optimale Wärmeabfuhr sorgen. In einer besonderen Ausführung - als wasserlösliches Korrosionsschutzkonzentrat (so genanntes "Chemical") - erfolgt die überproportionale Verdünnung mit Wasser.

Potentielle Anwendungsgebiete für die neuartigen Fluide sind technische Anlagen zum Wärme- und Kältetransport wie beispielsweise Kühltheken, Klimaanlagen, Thermostatisierbäder, Heizungsanlagen, Wärmepumpen, Solaranlagen, sowie Gefrier- bzw. Korrosionsschutzmittelkonzentrate für die Automobilindustrie, aber auch wässrige Kühlmittel für die Metallbearbeitung.

### Beispiele

Die in Tabelle 1 aufgelisteten Metallabtragswerte wurden über einen sogenannten Heißkorrosionstest unter Wärmedurchgangsbedingungen bzw. einem Korrosionstest nach ASTM D 1384 erhalten. Die Bedingungen bei der Heißkorrosion waren: 95°C, 1,5 bar Überdruck, Prüfdauer 47 h, Durchflussgeschwindigkeit 210 l/h, Heizflächenbelastung 78 W/cm². Die Standardbedingungen nach ASTM D 1384 sind: 88°C, Prüfdauer 336 h, einleiten von 6 Liter Luft/h.

Die nitrit-, amin- und phosphatfreien Kühlmittel (siehe Tabelle 1, Beispiele 1 bis 4) wurden alle jeweils in Unterkonzentration (20 Vol.-%) in entionisiertem Wasser (Heißkorrosionstest) bzw. in ASTM-Wasser (nach ASTM D 1384) getestet.

In allen Beispielen wurde der pH-Wert der Lösungen einheitlich auf pH 8,5 (1:2 in entionisiertem Wasser) eingestellt.

**Tabelle 1:**

| Metallabtragswerte beispielhafter Konzentrat-Formulierungen, ermittelt durch Heißkorrosion bzw. ASTM D 1384 | | | | |
|---|---|---|---|---|
| Komponenten [Gew.-%] | Beispiel 1 (V) | Beispiel 2 (V) | Beispiel 3 | Beispiel 4 (V) |
| Monoethylenglykol | Rest auf 100 | Rest auf 100 | Rest auf 100 | Rest auf 100 |
| Tolyltriazol | 0,05 | 0,05 | 0,05 | 0,05 |
| Na-Nitrat | 0,10 | 0,10 | 0,10 | 0,10 |
| 2-Ethylhexansäure-Na-Salz | 0,92 | 0,92 | 0,92 | 0,92 |
| Sebazinsäure-Na-Salz | 0,37 | 0,37 | 0,37 | 0,37 |
| Irgacor® L 190 plus*-Na-Salz | | 0,17 | 0,17 | |
| Methylcarbamat | | | 0,15 | 0,15 |
| Aluminium (AlSi₁₀Mg wa) | Korrosionsrate bzw. Gewichtsänderung [mg/Platte] nach Heißkorrosionstest | | | |
| Gewichtsänderung nach Reinigung** der AlSi10Mg-Platten [mg/Platte] | -171 | -25 | -31 | -116 |
| | Korrosionsrate bzw. Gewichtsänderung [g/m²]; ASTM D 1384-Test | | | |
| Kupfer (rein) | -0,7 | -0,7 | -0,7 | -0,9 |
| Weichlot (WL 30) | -2,6 | -3,4 | -3,0 | -2,8 |
| Messing (MS 63) | -0,7 | -0,8 | -1,1 | -2,6 |
| Stahl (CK 22) | -6,9 | ±0 | -0,9 | -0,1 |
| Grauguss (GG 25) | -72 | ±0 | -0,5 | -61 |
| Aluminiumguss (AlSi6Cu3) | -27 | -33 | -12 | -11 |

| | | | | |
|---|---|---|---|---|
| * "Irgacor^{®} L 190 plus" enthält 6,6',6"-(1,3,5-Triazin-2,4,6-triyltrümino)trihexansäure ** Reinigungsverfahren: Beizen mit 56 %-iger Salpetersäure (10 Minuten), Wasser, Bürste | | | | |

Beispiel 1 zeigt ein herkömmlich formuliertes Frostschutzmittel mit üblichen Inhaltsstoffen in gängiger Konzentration und durchschnittlicher Korrosionsinhibierung. Aus dem Vergleich von Beispiel 2 mit Beispiel 1 wird deutlich, dass die verwendete Triazintriiminocarbonsäure ein hervorragender Korrosionsinhibitor für Eisenmetalle ist. Die Kühlmittelformulierung übertrifft die Wirksamkeit aus Beispiel 1 in der ASTM-Korrosion für die Eisenmetalle deutlich; ebenso signifikant verbessert sich der Metallabtrag in der Heißkorrosion. Jedoch ist die Inhibierung von Aluminiumguss bei der ASTM-Prüfung noch immer nicht ausreichend gegeben.

Durch die Zugabe von Methylcarbamat (Beispiel 3) wird auch das Korrosionsverhalten der Aluminiumlegierung in der ASTM-Korrosion entscheidend verbessert.

Aus dem Vergleich Beispiel 3 mit Beispiel 4 wird deutlich, dass die Kombination von Methylcarbamat mit Carbonsäure einen synergetischen Effekt auslöst, der in seiner Wirkung die der Einzelkomponenten deutlich übertrifft. Diese Auswirkung zeigt sich am deutlichsten im Vergleich der Heißkorrosionsergebnisse der Formulierungen der beiden Beispiele.

Gut abgestimmte Frostschutzmittelformulierungen können so die Korrosionsrate einer üblichen Formulierung im Heißtest und in der ASTM-Korrosion signifikant verbessern.

## Patentansprüche

1. Kühlmittel- bzw. Gefrierschutzmittelkonzentrate, enthaltend
a) 0,05 bis 5 Gew.-% eines oder mehrerer Carbamate der Formel 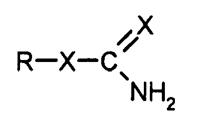 worin
X O oder S,
R C₁- bis C₈-Alkyl oder C₆- bis C₁₈-Aryl bedeuten,
oder deren Ammoniumsalze,
b) 0,05 bis 4 Gew.-% einer Tricarbonsäure und/oder einer Triazintriiminocarbonsäure,
c) 0,05 bis 8 Gew.-% einer Mono- und/oder Dicarbonsäure mit 4 bis 16 C-Atomen, in Form ihrer Alkalimetall- oder Ammoniumsalze,
d) 0,01 bis 2 Gew.-% eines Kohlenwasserstofftriazols oder Kohlenwasserstoffthiazols,
e) 0,01 bis 2 Gew.-% eines wasserlöslichen Alkali- und/oder Erdalkalimetallsalzes
f) 80 bis 99 Gew.-% Alkylenglykole, Polyglykole oder Glycerin.

2. Zusammensetzungen nach Anspruch 1, die bis zu 4 Gew.-% Verbindungen ausgewählt aus Alkalimetallnitriten, Aminen, Alkalimetallphosphaten, Alkalimetallphosphonaten, Alkalimetallboraten und Alkalimetallmolybdaten als Bestandteil h) enthalten.

3. Zusammensetzungen nach Anspruch 1 und/oder 2, die zusätzlich bis zu 6 Gew.-% Wasser enthalten.

4. Mischungen aus 5 bis 90 Gew.-% einer Zusammensetzung gemäß Anspruch 1 und 10 bis 95 Gew.-% Wasser.

## Claims

1. A coolant or antifreeze concentrate containing
a) from 0.05 to 5% by weight of one or more carbamates of the formula 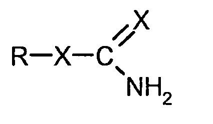 in which
X is O or S,
R is C₁- to C₈-alkyl or C₆- to C₁₈-aryl,
or the ammonium salts thereof,
b) from 0.05 to 4% by weight of a tricarboxylic acid and/or of a triazinetriiminocarboxylic acid,
c) from 0.05 to 8% by weight of a mono- and/or dicarboxylic acid having 4 to 16 carbon atoms, in the form of their alkali metal or ammonium salts,
d) from 0.01 to 2% by weight of a hydrocarbon-triazole or hydrocarbon-thiazole,
e) from 0.01 to 2% by weight of a water-soluble alkali metal salt and/or alkaline earth metal salt and
f) from 80 to 99% by weight of alkylene glycols, polyglycols or glycerol.

2. The composition as claimed in claim 1, which contains up to 4% by weight of compounds selected from alkali metal nitrites, amines, alkali metal phosphates, alkali metal phosphonates, alkali metal borates and alkali metal molybdates as component h).

3. The composition as claimed in claim 1 and/or 2, which additionally contains up to 6% by weight of water.

4. A mixture comprising from 5 to 90% by weight of a composition as claimed in claim 1 and from 10 to 95% by weight of water.

## Revendications

1. Concentré d'agent de refroidissement ou d'agent antigel, contenant
a) 0,05 à 5 % en poids d'un ou de plusieurs carbamates de formule 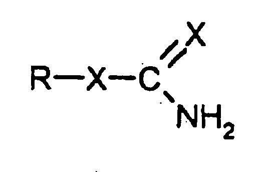 dans laquelle
X représente O ou S,
R représente un alkyle en C₁ à C₈ ou un aryle en C₆à C₁₈,
ou leurs sels d'ammonium,
b) 0,05 à 4 % en poids d'un acide tricarboxylique, et/ou d'un acide triazinetriiminocarboxylique,
c) 0,05 à 8 % en poids d'un acide mono- et/ou dicarboxylique avec 4 à 16 atomes de carbone, sous la forme de ses sels de métaux alcalins ou d'ammonium,
d) 0,01 à 2 % en poids d'un triazole hydrocarboné ou d'un thiazole hydrocarboné,
e) 0,01 à 2 % en poids d'un sel hydrosoluble de métal alcalin et/ou alcalino-terreux,
f) 80 à 99 % en poids d'alkylèneglycols, polyglycols ou glycérol.

2. Compositions selon la revendication 1, qui contiennent jusqu'à 4 % en poids de composés choisis parmi les nitrites de métaux alcalins, les amines, les phosphates de métaux alcalins, les phosphonates de métaux alcalins, les borates de métaux alcalins et les molybdates de métaux alcalins comme constituant h).

3. Compositions selon la revendication 1 et/ou 2, qui contiennent additionnellement jusqu'à 6 % en poids d'eau.

4. Mélanges de 5 à 90 % en poids d'une composition selon la revendication 1 et de 10 à 95 % en poids d'eau.
